# EUROPÄISCHE PATENTSCHRIFT

(11) **EP 1 420 991 B1**
(45) Veröffentlichungstag und Bekanntmachung des Hinweises auf die Patenterteilung: **16.11.2005**
(21) Anmeldenummer: 02797631.5
(22) Anmeldetag: 27.08.2002
(51) Int. Cl.: B60T 13/74, F16D 55/224

(54) **MOTORBETÄTIGBARE SCHEIBENBREMSE**
MOTOR-OPERATED DISC BRAKE
FREIN A DISQUE COMMANDE PAR UN MOTEUR

(30) Priorität: 31.08.2001 DE 10142644
(43) Veröffentlichungstag der Anmeldung: 26.05.2004
(73) Patentinhaber: Lucas Automotive GmbH, 56070 Koblenz (DE)
(72) Erfinder: BEUERLE, Christoph, 56068 Koblenz (DE); DANNE, Ulrich, 56170 Bendorf (DE); GILLES, Leo, 56077 Koblenz (DE)
(74) Vertreter: Röthinger, Rainer
(86) Internationale Anmeldenummer: PCT/EP2002/009562
(87) Internationale Veröffentlichungsnummer: WO 2003/020563

(56) Entgegenhaltungen:
- EP-A- 0 849 576
- WO-A-99/45292
- US-A- 5 915 504

## Beschreibung

Die Erfindung betrifft eine Scheibenbremse mit zwei zur Erzeugung einer Klemmkraft beidseits an eine Bremsscheibe anpressbaren Bremsbacken, einer mit einem Motor koppelbaren Umsetzeinrichtung, welche eine Antriebsbewegung des Motors in eine Betätigungsbewegung zur Betätigung mindestens einer der Bremsbacken umsetzt, und einer Abstützeinrichtung zur Aufnahme einer bei Erzeugung der Klemmkraft in die Umsetzeinrichtung eingeleiteten Reaktionskraft.

Eine solche Scheibenbremse ist aus der WO 88/04741 bekannt. Die bei dieser Scheibenbremse im Rahmen eines Bremsvorgangs auftretenden Kräfte lassen sich in Klemmkraft (auch Axialkraft, Querkraft oder Normalkraft genannt) und Umfangskraft (auch Reibkraft genannt) unterteilen. Als Klemmkraft wird diejenige Kraftkomponente bezeichnet, welche von einer Bremsbacke senkrecht zur Ebene der Bremsscheibe in die Bremsscheibe eingeleitet wird. Unter der Umfangskraft hingegen versteht man diejenige Kraftkomponente, welche aufgrund der Bremsreibung zwischen einem Reibbelag der Bremsbacke und der Bremsscheibe in Umfangsrichtung der Bremsscheibe auf die Bremsbacke wirkt. Durch Multiplikation der Umfangskraft mit dem Abstand des Angriffspunkts der Umfangskraft von der Drehachse der Räder lässt sich das Bremsmoment ermitteln.

Bei der aus der WO 88/04741 bekannten Scheibenbremse wird die Klemmkraft von einem Elektromotor erzeugt. Die Rotationsbewegung einer Motorwelle wird zunächst mittels eines Planetengetriebes untersetzt und anschließend mittels einer Umsetzeinrichtung in Gestalt einer Mutter-Spindel-Anordnung in eine Translationbewegung umgesetzt. Ein der Umsetzeinrichtung funktionell nachgeschalteter Kolben überträgt die Translationbewegung auf eine der beiden Bremsbacken. Da die Scheibenbremse als Schwimmsattel-Scheibenbremse ausgestaltet ist, wird in bekannter Weise auch die nicht unmittelbar mit dem Kolben zusammenwirkende Bremsbacke gegen die Bremsscheibe angepresst.

Aus der US 5,915,504 A und der WO 99/45292 A sind Scheibenbremsen mit zwei zur Erzeugung einer Klemmkraft beidseits an eine Bremsscheibe anpressbaren Bremsbacken bekannt. Bei jeder dieser Scheibenbremsen ist in einem gewissen Abstand von der Bremsscheibe und den Bremsbacken ein Kraftsensor zur Erfassung einer Reaktionskraft vorgesehen.

Zukünftige Bremsanlagen erfordern für Steuer- und Regelzwecke eine exakte Erfassung der bei einem Bremsvorgang auftretenden Kräfte. Es ist daher üblich, Scheibenbremsen mit einem oder mehreren Kraftsensoren zu bestücken und diese Kraftsensoren mit Steuer- und Regelschaltkreisen zu koppeln.

Der Erfindung liegt die Aufgabe zugrunde, eine Scheibenbremse anzugeben, welche einen im Hinblick auf Steuer- und Regelzwecke optimierten Aufbau besitzt.

Diese Aufgabe wird ausgehend von einer Scheibenbremse der eingangs genannten Art erfindungsgemäß dadurch gelöst, dass zwischen der Umsetzeinrichtung und der Abstützeinrichtung an unterschiedlichen Positionen zwei oder mehr Kraftsensoren, welche vorzugsweise eine planare Bauform besitzen, zur Erfassung wenigstens eines Teils der Reaktionskraft angeordnet sind. Die efindungsgemäße Anordnung der Kraftsensoren ist vorteilhaft im Hinblick auf eine exakte und zumindest weitestgehend umfangskraftentkoppelte Ermittlung der Klemmkraft. Außerdem ist der mindestens eine Kraftsensor nicht den hohen Temperaturen im Bereich der Bremsbacken ausgesetzt.

Gemäß dem Aspekt der planaren Bauform ist die Abmessung des Kraftsensors entlang derjenigen Achse, entlang welcher die Reaktionskraft auf den Kraftsensor wirkt, geringer als die Abmessungen des Kraftsensors senkrecht zu dieser Achse. Derartige Anforderungen erfüllen typischerweise Kraftsensoren in Schichtbauweise. So kann der Kraftsensor beispielsweise ein planares Substrat sowie eine auf das planare Substrat aufgebrachte, piezoresistive Schicht besitzen. Die piezoresistive Schicht ist vorteilhafterweise mittels eines Epitaxiverfahrens hergestellt und z.B. mittels Bondens auf das planare Substrat aufgebracht. Erfindungsgemäß können jedoch auch anderweitig ausgestaltete Piezo-Kraftsensoren sowie auf anderen physikalischen Messprinzipien beruhende Kraftsensoren zum Einsatz gelangen.

Die Scheibenbremse umfasst eine Mehrzahl von Kraftsensoren, welche derart verteilt angeordnet sind, dass eine gemittelte Erfassung der Reaktionskraft erfolgen kann. Aufgrund der hohen, bei einem Bremsvorgang auftretenden Kräfte und der daraus resultierenden Deformation einzelner Komponenten der Scheibenbremse, beispielsweise eines Bremssattels, wird die Reaktionskraft nämlich in der Regel unsymmetrisch in die Abstützeinrichtung eingeleitet. Wenn in diesem Fall die in die Abstützeinrichtung eingeleitete Reaktionskraft an mehreren, voneinander beabstandeten Positionen gemessen wird, lässt sich eine Mehrzahl von Messwerten generieren, die einen exakten Rückschluss auf die tatsächlich auftretende Klemmkraft gestattet. Im einfachsten Fall erfolgt der Rückschluss auf die tatsächliche Klemmkraft durch Mittelung der einzelnen, gemessenen Reaktionskraftwerte.

Zur Erfassung der Reaktionskraft an unterschiedlichen Positionen können zwei oder mehr Kraftsensoren vorgesehen werden, welche beabstandet voneinander und in einer zu einer Längsachse der Scheibenbremse senkrechten Ebene angeordnet sind. Eine derartige, koplanare Anordnung planarer Kraftsensoren gestattet eine besonders einfache Ermittlung der tatsächlich auftretenden Klemmkraft. Vorzugsweise umfasst die Scheibenbremse mindestens vier Kraftsensoren, welche derart angeordnet sind, dass zwei bezüglich der Längsachse der Scheibenbremse in Umfangsrichtung benachbarte Kraftsensoren einen Winkelabstand in der Größenordnung von 90° oder weniger bezüglich dieser Längsachse besitzen.

Die Abstützeinrichtung zur Aufnahme der Reaktionskraft ist zweckmäßigerweise starr mit einem Gehäuse der Scheibenbremse gekoppelt. So kann die Abstützeinrichtung beispielsweise ein separates, innerhalb des Gehäuses der Scheibenbremse befestigtes Bauteil sein. Es kann jedoch auch daran gedacht werden, die Abstützeinrichtung beispielsweise in Gestalt einer Stufe einstückig mit dem Gehäuse der Scheibenbremse auszubilden. In diesem Fall kann der mindestens eine Kraftsensor auf die Stufe aufgebracht oder ganz oder teilweise in die Stufe integriert sein.

Der mindestens eine Kraftsensor kann jedoch auch an oder in einem separaten Kraftsensor-Träger angeordnet sein. Dieser Träger, welcher eine kreisringförmige Form aufweisen kann, ist zweckmäßigerweise zwischen der Umsetzeinrichtung und der Abstützeinrichtung angeordnet.

Zusätzlich oder anstatt des Trägers kann zwischen der Umsetzeinrichtung und der Abstützeinrichtung ein Lager für die Umsetzeinrichtung angeordnet sein. Sofern ein Lager für die Umsetzeinrichtung vorhanden ist, kann der mindestens eine Kraftsensor auch im Bereich dieses Lagers angeordnet werden. So ist es denkbar, den Kraftsensor in oder auf einer Komponente des Lagers zu befestigen.

Gemäß einer bevorzugten Ausgestaltung der Erfindung ist die Umsetzeinrichtung derart ausgestaltet, dass sie eine rotatorische Antriebsbewegung des Motors in eine translatorische Betätigungsbewegung zur Betätigung mindestens einer der Bremsbacken umsetzt. In diesem Fall kann die Abstützeinrichtung, gegebenenfalls über ein Lager, mit einer in eine Rotationsbewegung versetzbaren Komponente der Umsetzeinrichtung zusammenwirken. Wenn die Umsetzeinrichtung beispielsweise eine Mutter-Spindel-Anordnung umfasst, kann die Abstützeinrichtung mit einer rotierenden Mutter (bei translatorisch bewegbarer Spindel) oder einer rotierenden Spindel (bei translatorisch bewegbarer Mutter) zusammenwirken. Vorzugsweise ist die Spindel der Mutter-Spindel-Anordnung in eine Rotationsbewegung versetzbar und gegenüber der Reaktionskraft an einer Stufe des Scheibenbremsengehäuses abgestützt.

Die Erfindung besitzt eine Vielzahl möglicher Anwendungsgebiete. Die erfindungsgemäßen Vorteile kommen bei einer mit der erfindungsgemäßen Scheibenbremse ausgestatteten elektromotorischen Fahrzeugbremsanlage besonders ausgeprägt zur Geltung.

Mehrere Ausführungsbeispiele einer erfindungsgemäßen Scheibenbremse werden nachfolgend unter Bezugnahme auf die beigefügten, schematischen Zeichnungen näher erläutert. Es zeigt:
- Fig. 1: eine Schnittansicht einer erfindungsgemäßen Scheibenbremse;
- Fign. 2A - 2C: je einen vergrößerten Ausschnitt der Scheibenbremse gemäß Fig. 1 mit an unterschiedlichen Stellen angeordnetem Kraftsensor;
- Fig. 3: eine Aufsicht auf eine Abstützeinrichtung mit montiertem Trägerring für vier Kraftsensoren gemäß Fig. 2C; und
- Fig. 4: einen vergrößerten Ausschnitt der Abstützeinrichtung gemäß Fig. 3.

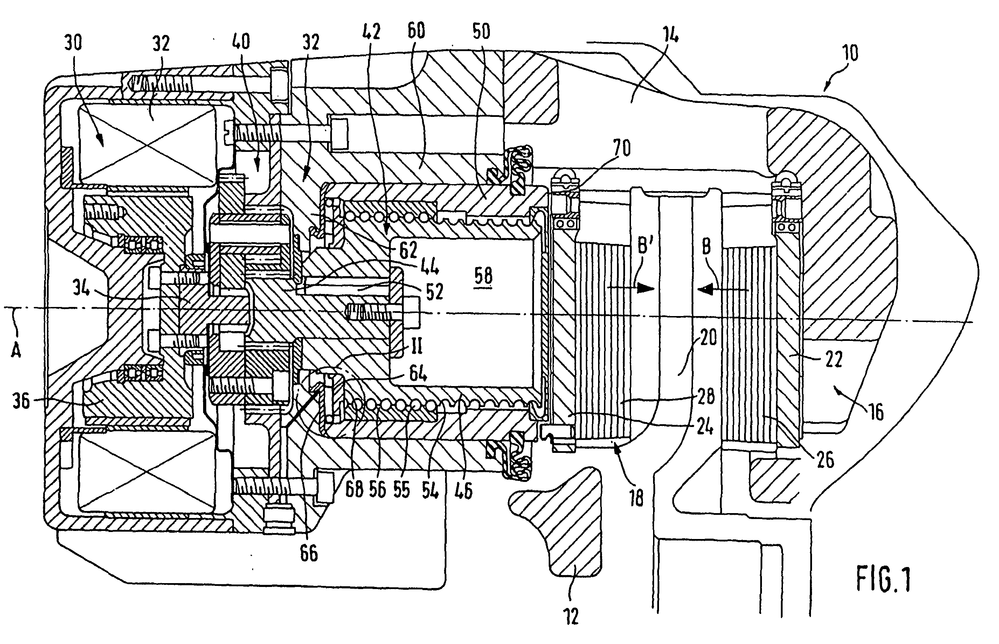

In Fig. 1 ist ein Ausführungsbeispiel einer erfindungsgemäßen Schwimmsattel-Scheibenbremse 10 mit einem bezüglich eines Bremsträgers 12 verschieblichen Schwimmsattel 14 dargestellt. Die Scheibenbremse 10 umfasst zwei Bremsbacken 16, 18, welche beidseits an eine Bremsscheibe 20 anpressbar sind. Jede der beiden Bremsbacken 16, 18 besitzt eine Trägerplatte 22, 24 und einen auf der Trägerplatte 22, 24 angeordneten Reibbelag 26, 28. Mittels des Reibbelags 26, 28 wirkt jede der beiden Bremsbacken 16, 18 mit der Bremsscheibe 20 zusammen. Während des Zusammenwirkens der Bremsbacken 16, 18 mit der Bremsscheibe 20 wird eine entlang der Pfeile B, B' wirkende Klemmkraft erzeugt.

Zur Erzeugung der Klemmkraft ist ein Elektromotor 30 vorgesehen, welcher eine Motorwickelung 32 und einen mit einer Motorwelle 34 starr gekoppelten Rotor 36 umfasst. Die Motorwelle 34 ist mit der Eingangsseite eines Untersetzungsgetriebes 40 verbunden, dessen Ausgangsseite mit einer Umsetzeinrichtung 42 zum Umsetzen einer Rotationsbewegung des Elektromotors 30 in eine Translationsbewegung gekoppelt ist. Die Umsetzeinrichtung 42 ist als Spindel-Mutter-Anordnung ausgestaltet und umfasst eine zweiteilige Spindeleinheit 44, 46 sowie eine koaxial zur Spindeleinheit 44, 46 und radial außen bezüglich dieser angeordnete Mutter 50. Die zweiteilige Spindeleinheit setzt sich aus einem ersten, stangenförmigen Spindelelement 44 und einem zweiten, drehfest mit dem stangenförmigen Spindelelement 44 gekoppelten, becherförmigen Spindelelement 46 zusammen. Die Spindeleinheit 44, 46 kann auch von einem einzigen Bauteil gebildet sein. In diesem Fall sind das stangenförmige Spindelelement 44 und das becherförmige Spindelelement 46 einstückig ausgestaltet.

Das stangenförmige Spindelelement 44 ist mit seinem den Bremsbacken 16,18 abgewandten Ende mit der Ausgangsseite des Untersetzungsgetriebes 40 gekoppelt und ragt mit seinem anderen Ende in eine zylindrische Öffnung 52 im Grund des becherförmigen Spindelelements 46. Die drehfeste Verbindung zwischen den beiden Spindelelementen 44, 46 ist mittels des Eingriffs von im Bereich der Öffnung 52 ausgebildeten Rippen des becherförmigen Spindelelements 46 in korrespondierende Nuten des stangenförmigen Spindelelements 44 gewährleistet.

Abweichend von Fig. 1 kann das Spindelelement 44 der Umsetzeinrichtung 42 auch mittels einer Bogenverzahnung an das Untersetzungsgetriebe 40 bzw. den Elektromotor 30 gekoppelt sein. Durch die Bogenverzahnung besteht dann nicht nur eine drehfeste Verbindung, sondern das Spindelelement 44 ist um die Längsachse A in einem bestimmten Winkelbereich bewegbar, so dass Querkräfte kompensiert werden, die während der Rotationsbewegung der Spindeleinheit 44, 46 auftreten und die Ermittlung der tatsächlichen Klemmkraft nachteilig beeinflussen können.

Die Umsetzeinrichtung 42 ist derart ausgebildet, dass eine Rotation der Spindeleinheit 44, 46 um eine Längsachse A der Scheibenbremse 10 in eine Translationbewegung der Mutter 50 entlang dieser Längsachse A umgesetzt wird. Zu diesem Zweck ist das becherförmige Spindelelement 46 mit einem Außengewinde 54 versehen, welches mittels einer Vielzahl von Kugelelementen 55 mit einem komplementären Innengewinde 56 der Mutter 50 zusammenwirkt.

Die Umsetzeinrichtung 42 ist in einer zentralen Öffnung 58 eines Gehäuses 60 der Scheibenbremse 10 aufgenommen. Die Öffnung 58 wird von einer Innendurchmesserverringerung des Gehäuses 60 in Gestalt einer Stufe 62 begrenzt. Wie weiter unten näher erläutert wird, fungiert die Stufe 62 als Abstützeinrichtung zur Aufnahme einer in die Umsetzeinrichtung 42 eingeleiteten Reaktionskraft.

Ein mehrkomponentiges Lager 64 ist zwischen einer den Bremsbacken 16, 18 zugewandten Stirnseite der Stufe 62 und einer dem Elektromotor 30 zugewandten Stirnseite 68 des becherförmigen Spindelelements 46 angeordnet. Das Lager 64 gewährleistet eine Stabilisierung der Rotationsbewegung der Spindeleinheit 44, 46 insbesondere dann, wenn eine Rückwirkkraft in die Spindeleinheit 44, 46 eingeleitet wird.

Nachfolgend wird die Funktionsweise der in Fig. 1 dargestellten Scheibenbremse 10 näher erläutert.

Wird ausgehend von der in Fig. 1 dargestellten Ruhestellung der Scheibenbremse 10 zur Erzeugung einer Klemmkraft der Elektromotor 30 in Betrieb genommen, überträgt das Untersetzungsgetriebe 40 eine Rotationsbewegung der Motorwelle 34 auf die Spindeleinheit 44, 46. Die Rotationsrichtung der Spindeleinheit 44, 46 ist derart gewählt, dass die mit der Spindeleinheit 44, 46 zusammenwirkende Mutter 50 in Fig. 1 nach rechts bewegt wird. Dabei gelangt die den Bremsbacken 16, 18 zugewandte Stirnseite 70 der Mutter 50 in Anlage an die dem Reibbelag 28 abgewandte Oberfläche der Trägerplatte 24 der Bremsbacke 18. Die Bremsbacke 18 wird daraufhin von der Translationbewegung der Mutter 50 erfasst und in Richtung des Pfeils B' an die Bremsscheibe 20 angepresst. Aufgrund der konstruktiven Ausgestaltung der Scheibenbremse 10 als Schwimmsattelscheibenbremse wird infolge des Anpressens der Bremsbacke 18 an die Bremsscheibe 20 auch die gegenüberliegende Bremsbacke 16 in Richtung des Pfeils B an die Bremsscheibe 20 angepresst. Auf diese Weise wird die in Richtung der Pfeile B, B' wirkende Klemmkraft erzeugt.

Gemäß dem physikalischen Grundprinzip actio = reactio wirkt bei der Erzeugung der Klemmkraft eine Reaktionskraft auf die Mutter 50, welche von der Mutter 50 in das becherförmige Spindelelement 46 und von dem becherförmigen Spindelelement 46 über das Lager 64 in die als Abstützeinrichtung fungierende Stufe 62, also in das Gehäuse 60 der Scheibenbremse 10 eingeleitet wird.

Zum Abschalten oder Reduzieren der Klemmkraft wird der Elektromotor 30 derart angesteuert, dass die Motorwelle 34 und daher auch die Spindeleinheit 44, 46 ihre Rotationsrichtung ändert. Infolge der Umkehr der Rotationsrichtung wird die Mutter 50 in Fig. 1 nach links bewegt, wodurch sich die von den Bremsbacken 16, 18 erzeugte Klemmkraft reduziert.

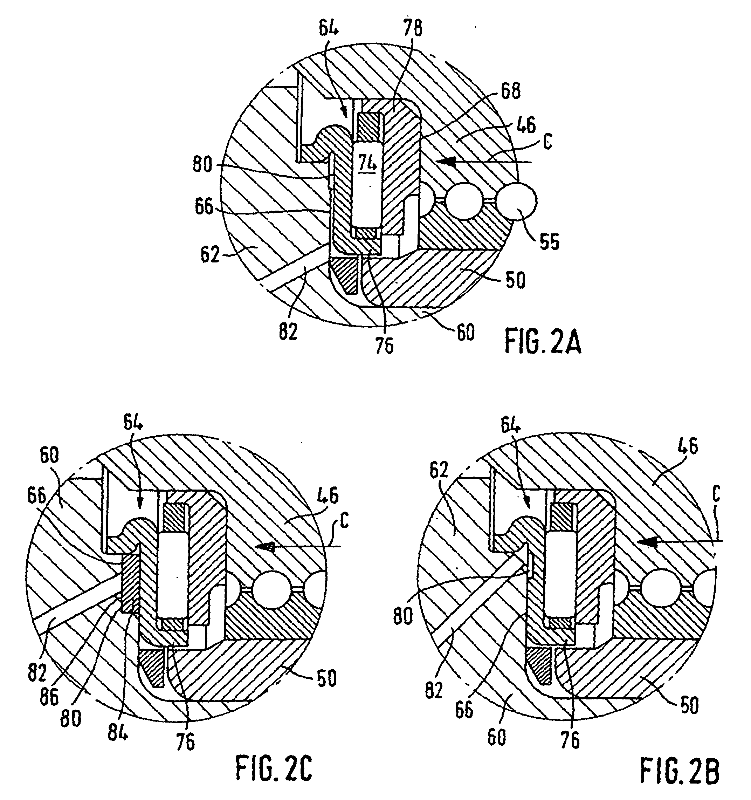

In Fig. 2A ist eine Ausschnittsvergrößerung II der Scheibenbremse 10 gemäß Fig. 1 dargestellt. Die Ausschnittsvergrößerung zeigt den Aufbau des zwischen einer Stirnseite 66 der Stufe 62 und einer gegenüberliegenden Stirnseite 68 des becherförmigen Spindelelements 46 angeordneten Lagers 64. Das Lager 64 umfasst eine Mehrzahl von Wälzrollen 74, welche zwischen zwei kreisringförmigen Halterungen 76, 78 angeordnet sind. Die erste Halterung 76 besitzt einen im Wesentlichen Z-förmigen Querschnitt und liegt an der Stirnseite 66 der Stufe 62 an. Die zweite Halterung 78 besitzt einen im Wesentlichen L-förmigen Querschnitt und liegt an der Stirnseite 68 des becherförmigen Spindelelements 46 an. Zwischen den beiden Halterungen 76, 78 sind die Wälzlager 74 unverlierbar aufgenommen.

Ein planarer Kraftsensor 80 ist in die Stirnseite 66 der Stufe 62, d.h. in das Gehäuse 60 der Scheibenbremse 10 integriert und somit funktionell zwischen der als Abstützeinrichtung fungierenden Stufe 62 und der becherförmigen Spindeleinheit 46 der Umsetzeinrichtung angeordnet. Eine Reaktionskraft, welche in Richtung des Pfeils C von dem becherförmigen Spindelelement 46 über dessen Stirnseite 68 in das Lager 64 eingeleitet wird, wird von einer der Stufe 62 zugewandten Stirnseite der Halterung 76 in den Kraftsensor 80 weitergeleitet und kann von diesem erfasst werden. Ein Sensorsignal des Kraftsensors 80 wird mittels einer in Fig. 2A nicht dargestellten, flexiblen Leiterbahn Steuer- und Regelschaltkreisen zugeführt. Die flexible Leiterbahn verläuft durch eine im Gehäuse 60 ausgebildete Bohrung 82.

Bei dem planaren Kraftsensor 80 handelt es sich um einen Piezo-Sensor. Genauer gesagt besteht der Kraftsensor 80 aus einem planaren Substrat aus Borsilikatglas, auf welchem mittels eines herkömmlichen Bondingverfahrens eine monokristalline piezoresistive Schicht befestigt ist. Die piezoresistive Schicht wurde mittels eines Epitaxiverfahrens abgeschieden und mittels eines reaktiven Ionenätzschritts strukturiert (Fig. 4).

In den Fign. 2B und 2C sind weitere Ausführungsbeispiele betreffend die Anordnung eines Kraftsensors 80 dargestellt. Bei dem Ausführungsbeispiel gemäß Fig. 2B ist der Kraftsensor 80 nicht in das Gehäuse 60 der Scheibenbremse integriert, sondern in die Halterung 76, d.h. in eine Komponente des Lagers 64. Wie sich aus Fig. 2B ergibt, ist der Kraftsensor 80 auf einer der Stirnseite 66 des Gehäuses 60 zugewandten Stirnseite der Halterung 76 angeordnet.

Gemäß dem in Fig. 2C dargestellten Ausführungsbeispiel ist ein separater Trägerring 84 für den oder die Kraftsensoren 80 vorhanden. Der Trägerring 84 ist als separates Bauteil zwischen der Stufe 62 des Gehäuses 60 und der Halterung 76 des Lagers 64 angeordnet. Zu diesem Zweck ist in der Stirnseite 66 der Stufe 62 eine weitere Stufe 86 zur Aufnahme des Trägerrings 84 ausgebildet.

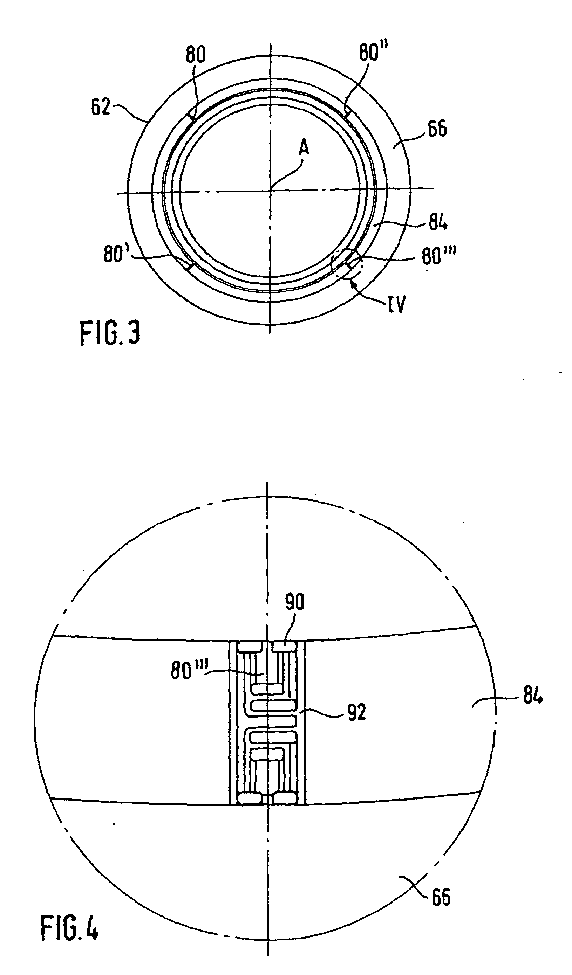

In Fig. 3 ist eine Aufsicht auf die Stirnseite 66 der Stufe 62 mit dem Trägerring 84 von Fig. 2C dargestellt. Die Aufsicht entspricht einem Blick in die Öffnung 58 des Gehäuses 60 gemäß Fig. 1 entlang des Pfeils B vor Montage des Lagers 64 und der Umsetzeinrichtung 42. Wie sich aus Fig. 3 ergibt, sind insgesamt vier Kraftsensoren 80, 80', 80", 80'" an dem Trägerring 84 derart befestigt, dass zwei in Umfangsrichtung des Trägerrings 84 benachbarte Kraftsensoren bezüglich der Längsachse A einen Winkelabstand von genau 90° besitzen. Eine derartige Anordnung der Kraftsensoren 80, 80', 80", 80'" gewährleistet selbst bei unsymmetrischer Beaufschlagung der als Abstützeinrichtung fungierenden Stufe 62 mit der Reaktionskraft eine zuverlässige Ermittlung der tatsächlichen Klemmkraft, beispielsweise durch Mittlung der vier resultierenden Sensorsignale. Wie sich aus Fig. 3 ergibt, sind die einzelnen Kraftsensoren 80, 80', 80", 80'" beabstandet voneinander in einer zur Längsachse A senkrechten Ebene angeordnet.

Fig. 4 zeigt ein Detail IV der Ansicht gemäß Fig. 3. Fig. 4 lässt sich insbesondere der Aufbau eines einzelnen der vier in Fig. 3 dargestellten Kraftsensoren 80, 80', 80", 80"' entnehmen. Der Kraftsensor 80'" umfasst ein planares Substrat 92 und eine nach Art einer Brücke strukturierte piezoresistive Schicht 90, welche auf dem Substrat 92 angeordnet ist. Mittels der Brückenstruktur der piezoresistiven Schicht 90 lassen sich Temperatureffekte kompensieren.

Die vorstehend beschriebene Schwimmsattelscheibenbremse gestattet eine exakte Klemmkraft-Rückschlussermittlung zum Zweck der Regelung einer elektromotorischen Fahrzeugbremsanlage und trägt insbesondere einer unsymmetrischen Kraftbeaufschlagung der Abstützeinrichtung Rechnung. Die Verwendung planarer Kraftsensoren ist vorteilhaft im Hinblick auf die konstruktive Auslegung und insbesondere die Baugröße der Scheibenbremse. Vorteilhaft ist weiterhin, dass die einzelnen Kraftsensoren beabstandet von den Bremsbacken und damit außerhalb von Bereichen hoher Temperaturen angeordnet sind.

## Patentansprüche

1. Scheibenbremse (10), mit
- zwei zur Erzeugung einer Klemmkraft (B, B') beidseits an eine Bremsscheibe (20) anpressbaren Bremsbacken (16, 18);
- einer mit einem Motor (30) koppelbaren Umsetzeinrichtung (42), welche eine Antriebsbewegung des Motors (30) in eine Betätigungsbewegung zur Betätigung mindestens einer der Bremsbacken (16, 18) umsetzt; und
- einer Abstützeinrichtung (62) zur Aufnahme einer bei Erzeugung der Klemmkraft (B, B') in die Umsetzeinrichtung (42) eingeleiteten Reaktionskraft (C),
**dadurch gekennzeichnet,**
**dass** zwischen der Umsetzeinrichtung (42) und der Abstützeinrichtung (62) an unterschiedlichen Positionen zwei oder mehr Kraftsensoren zur Erfassung wenigstens eines Teils der Reaktionskraft (C) angeordnet sind.

2. Scheibenbremse nach Anspruch 1, **dadurch gekennzeichnet,**
**dass** die Kraftsensoren (80) eine planare Bauform besitzen.

3. Scheibenbremse nach Anspruch 1 oder 2, **dadurch gekennzeichnet,**
**dass** die Kraftsensoren (80) Piezo-Sensoren sind.

4. Scheibenbremse nach einem der Ansprüche 1 bis 3, **dadurch gekennzeichnet,**
**dass** die Kraftsensoren (80) auf planare Substrate (92) aufgebrachte, piezoresistive Schichten (90) besitzen.

5. Scheibenbremse nach einem der Ansprüche 1 bis 4, **dadurch gekennzeichnet,**
**dass** die zwei oder mehr Kraftsensoren (80, 80', 80", 80''') beabstandet voneinander in einer zu einer Längsachse (A) der Scheibenbremse (10) senkrechten Ebene angeordnet sind.

6. Scheibenbremse nach einem der Ansprüche 1 bis 5, **dadurch gekennzeichnet,**
**dass** die Scheibenbremse (10) vier oder mehr Kraftsensoren (80, 80', 80", 80"') umfasst, wobei je zwei benachbarte Kraftsensoren (80, 80', 80", 80"') einen Winkelabstand in der Größenordnung von 90° oder weniger bezüglich der Längsachse (A) der Scheibenbremse (10) besitzen.

7. Scheibenbremse nach einem der Ansprüche 1 bis 6, **dadurch gekennzeichnet,**
**dass** die Abstützeinrichtung (62) starr mit einem Gehäuse (60) der Scheibenbremse (10) gekoppelt ist.

8. Scheibenbremse nach Anspruch 7, **dadurch gekennzeichnet,**
**dass** die Abstützeinrichtung eine in dem Gehäuse (60) der Scheibenbremse (10) ausgebildete Stufe (62) umfasst.

9. Scheibenbremse nach Anspruch 8, **dadurch gekennzeichnet,**
**dass** die Kraftsensoren (80) auf die Stufe (62) aufgebracht oder zumindest teilweise in die Stufe (62) integriert sind.

10. Scheibenbremse nach einem der Ansprüche 1 bis 8, **dadurch gekennzeichnet,**
**dass** zwischen der Umsetzeinrichtung (42) und der Abstützeinrichtung (62) ein Träger (84) zur Aufnahme der Kraftsensoren (80) angeordnet ist.

11. Scheibenbremse nach einem der Ansprüche 1 bis 8, **dadurch gekennzeichnet,**
**dass** zwischen der Umsetzeinrichtung (42) und der Abstützeinrichtung (62) ein Lager (64) angeordnet ist und die Kraftsensoren (80) in oder auf einer Komponente (76) des Lagers (64) befestigt sind.

12. Scheibenbremse nach einem der Ansprüche 1 bis 11, **dadurch gekennzeichnet,**
**dass** die Umsetzeinrichtung (42) eine rotatorische Antriebsbewegung des Motors (30) in eine translatorische Betätigungsbewegung zur Betätigung mindestens einer der Bremsbacken (16, 18) umsetzt.

13. Scheibenbremse nach Anspruch 12, **dadurch gekennzeichnet,**
**dass** die Abstützeinrichtung (62) mit einer in eine Rotationsbewegung versetzbaren Komponente (46) der Umsetzeinrichtung (42) zusammenwirkt.

14. Scheibenbremse nach Anspruch 12 oder 13, **dadurch gekennzeichnet,**
**dass** die Umsetzeinrichtung (42) eine Mutter-Spindel-Anordnung (44, 46, 50) umfasst.

15. Scheibenbremse nach Anspruch 14, **dadurch gekennzeichnet,**
**dass** die Spindel (46) in eine Rotationsbewegung versetzbar und gegenüber der Reaktionskraft (C) an der Stufe (62) abgestützt ist.

16. Fahrzeugbremsanlage mit einer Scheibenbremse (10) nach
einem der Ansprüche 1 bis 15.

## Claims

1. Disc brake (10), comprising
- two brake shoes (16, 18), which for generating a clamping force (B, B') are pressable against both sides of a brake disc (20);
- a conversion device (42), which is connectable to a motor (30) and converts a driving motion of the motor (30) into an actuating motion for actuating at least one of the brake shoes (16, 18); and
- a support device (62) for taking up a reaction force (C), which upon generation of the clamping force (B, B') is introduced into the conversion device (42),
**characterized in**
**that** between the conversion device (42) and the support device (62) two or more force sensors are disposed at different positions for measuring at least a fraction of the reaction force (C).

2. Disc brake according to claim 1, **characterized in that** the force sensors (80) have a planar form of construction.

3. Disc brake according to claim 1 or 2, **characterized in that** the force sensors (80) are piezoelectric sensors.

4. Disc brake according to one of claims 1 to 3, **characterized in that** the force sensors (80) have piezoresistive layers (90) applied onto planar substrates (92).

5. Disc brake according to one of claims 1 to 4, **characterized in that** the two or more force sensors (80, 80', 80", 80'"), are disposed at a distance from one another in a plane at right angles to a longitudinal axis (A) of the disc brake (10).

6. Disc brake according to one of claims 1 to 5, **characterized in that** the disc brake (10) comprises four or more force sensors (80, 80', 80", 80'"), wherein each two adjacent force sensors (80, 80', 80", 80"') have an angular distance in the order of magnitude of 90° or less in relation to the longitudinal axis (A) of the disc brake (10).

7. Disc brake according to one of claims 1 to 6, **characterized in that** the support device (62) is coupled rigidly to a housing (60) of the disc brake (10).

8. Disc brake according to claim 7, **characterized in that** the support device comprises a step (62) formed in the housing (60) of the disc brake (10).

9. Disc brake according to claim 8, **characterized in that** the force sensors (80) are applied onto the step (62) or are integrated at least partially into the step (62).

10. Disc brake according to one of claims 1 to 8, **characterized in that** between the conversion device (42) and the support device (62) a carrier (84) is disposed for receiving the force sensors (80).

11. Disc brake according to one of claims 1 to 8, **characterized in that** between the conversion device (42) and the support device (62) a bearing (64) is disposed and the force sensors (80) are fastened in or on a component (76) of the bearing (64).

12. Disc brake according to one of claims 1 to 11, **characterized in that** the conversion device (42) converts a rotary driving motion of the motor (30) into a translatory actuating motion for actuating at least one of the brake shoes (16, 18).

13. Disc brake according to claim 12, **characterized in that** the support device (62) interacts with a component (46) of the conversion device (42), which component is adapted to be set in rotational motion.

14. Disc brake according to claim 12 or 13, **characterized in that** the conversion device (42) comprises a nut/spindle arrangement (44, 46, 50).

15. Disc brake according to claim 14, **characterized in that** the spindle (46) is adapted to be set in rotational motion and is supported relative to the reaction force (C) against the step (60).

16. Vehicle brake system having a disc brake (10) according to one of claims 1 to 15.

## Revendications

1. Frein à disque (10) comprenant :
- deux mâchoires de frein (16, 18) pouvant être pressées contre les deux faces d'un disque de frein (20) pour générer une force de serrage (B, B') ;
- un dispositif convertisseur (42) pouvant être relié à un moteur (30), qui convertit un mouvement d'entraînement du moteur (30) en un mouvement d'actionnement pour actionner au moins l'une des mâchoires de frein (16, 18) ; et
- un dispositif d'appui (62) pour recevoir une force de réaction (C) introduite dans le dispositif convertisseur (42) lors de la génération de la force de serrage (B, B'),
**caractérisé en ce que**
deux capteurs de force, ou plus, sont disposés à différents points entre le dispositif convertisseur (42) et le dispositif d'appui (62) pour détecter au moins une partie de la force de réaction (C).

2. Frein à disque selon la revendication 1,
**caractérisé en ce que** les capteurs de force (80) présentent une forme de construction planaire.

3. Frein à disque selon la revendication 1 ou 2,
**caractérisé en ce que** les capteurs de force (80) sont des capteurs piézoélectriques.

4. Frein à disque selon l'une quelconque des revendications 1 à 3,
**caractérisé en ce que** les capteurs de force (80) possèdent des couches piézo-résistives (90) déposées sur des substrats planaires (92).

5. Frein à disque selon l'une quelconque des revendications 1 à 4,
**caractérisé en ce que** les deux capteurs de force, ou plus, (80, 80', 80", 80"') sont disposés distants les uns des autres dans un plan perpendiculaire à un axe longitudinal (A) du frein à disque (10).

6. Frein à disque selon l'une quelconque des revendications 1 à 5,
**caractérisé en ce que** le frein à disque (10) comprend quatre capteurs de force, ou plus, (80, 80', 80", 80"'), deux capteurs de force (80, 80', 80", 80"') voisins présentant une distance angulaire d'un ordre de grandeur de 90° ou moins par rapport à l'axe longitudinal (A) du frein à disque (10).

7. Frein à disque selon l'une quelconque des revendications 1 à 6,
**caractérisé en ce que** le dispositif d'appui (62) est relié de façon rigide à un boîtier (60) du frein à disque (10).

8. Frein à disque selon la revendication 7,
**caractérisé en ce que** le dispositif d'appui comprend un gradin (62) formé dans le boîtier (60) du frein à disque (10).

9. Frein à disque selon la revendication 8,
**caractérisé en ce que** les capteurs de force (80) sont placés sur le gradin (62) ou du moins partiellement intégrés dans le gradin (62).

10. Frein à disque selon l'une quelconque des revendications 1 à 8,
**caractérisé en ce qu'**un support (84) est disposé entre le dispositif convertisseur (42) et le dispositif d'appui (62) pour recevoir les capteurs de force (80).

11. Frein à disque selon l'une quelconque des revendications 1 à 8,
**caractérisé en ce qu'**un palier (64) est disposé entre le dispositif convertisseur (42) et le dispositif d'appui (62), et **en ce que** les capteurs de force (80) sont fixés dans ou sur un composant (76) du palier (64).

12. Frein à disque selon l'une quelconque des revendication 1 à 11,
**caractérisé en ce que** le dispositif convertisseur (42) convertit un mouvement d'entraînement rotatif du moteur (30) en un mouvement d'actionnement translatoire pour actionner au moins l'une des mâchoires de frein (16, 18).

13. Frein à disque selon la revendication 12,
**caractérisé en ce que** le dispositif d'appui (62) coopère avec un composant (46) du dispositif convertisseur (42) pouvant être mis en mouvement de rotation.

14. Frein à disque selon la revendication 12 ou 13,
**caractérisé en ce que** le dispositif convertisseur (42) comprend un ensemble vis-écrou (44, 46, 50).

15. Frein à disque selon la revendication 14,
**caractérisé en ce que** la broche (46) peut être mise en mouvement de rotation et est en appui sur le gradin (62) par rapport à la force de réaction (C).

16. Système de freinage de véhicule comprenant un frein à disque (10) selon l'une quelconque des revendications 1 à 15.
